# EUROPEAN PATENT APPLICATION

(11) **EP 4 851 504 A1**
(43) Date of publication of application: **09.12.2026**
(21) Application number: 26182214.2
(22) Date of filing: 01.06.2026
(51) Int. Cl.: F16H 63/46, B60W 30/19, F16H 61/04, F16H 59/50

(54) **LEANING VEHICLE**

(30) Priority: 04.06.2025 JP 2025093745
(71) Applicant: Yamaha Hatsudoki Kabushiki Kaisha, Iwata-shi, Shizuoka 438-8501 (JP)
(72) Inventor: OHATA, Shinobu, Iwata-shi, Shizuoka, 438-8501 (JP)
(74) Representative: Stöckeler, Ferdinand

(57) **Abstract**

Provided is a leaning vehicle that achieves both prevention of prolongation of the period in which driving force being transmitted to a rear wheel is reduced for a gear shifting and a gradual return from a grip-recovering state to a slip state during vehicle travel with rear-wheel slip. For an upshift, a control unit of the leaning vehicle controls a clutch actuator to reduce transmitted driving force before cancelling an engagement of dog elements and restores the transmitted driving force after establishing an engagement of the dog elements corresponding to a post-upshift gear stage. In a case where the upshift is performed while the leaning vehicle is in a slip handling state, the control unit controls the clutch actuator such that the transmitted driving force being restored after the establishment of the engagement of the dog elements corresponding to the post-upshift gear stage is at a lower level than that in a case where the leaning vehicle is in a state other than the slip handling state. The slip handling state represents a state in which slip of the rear wheel has been detected or a state in which the control unit has been set to a slip-assuming control state through a rider operation.

## Description

### Technical Field

The present teaching relates to a leaning vehicle.

### Background Art

Patent Literature (PTL) 1, for example, discloses a motorcycle that is a leaning vehicle. The motorcycle disclosed in PTL 1 includes a dog-clutch-type automatic transmission. A control unit for the dog-clutch-type automatic transmission reduces the torque of a power source at dog disengagement during a gear shifting and, after completion of the dog disengagement, restores the torque of the power source that has been reduced.

### Citation List

### Patent Literature

PTL 1: WO 2023/112324

### Summary of Invention

### Technical Problem

Under special environments such as racing environments, a leaning vehicle is sometimes required to achieve both prevention of prolongation of the period in which driving force being transmitted to a rear wheel is reduced for a gear shifting and a gradual return from a grip-recovering state to a slip state during vehicle travel with rear-wheel slip.

An object of the present teaching is to provide a leaning vehicle that achieves both prevention of prolongation of the period in which driving force being transmitted to a rear wheel is reduced for a gear shifting and a gradual return from a grip-recovering state to a slip state during vehicle travel with rear-wheel slip.

### Solution to Problem

One traveling method of a leaning vehicle involves causing slip of a rear wheel, which is a drive wheel, relative to the road surface. For example, in a situation in which an off-road vehicle is cornering on a dirt road surface under a special environment such as a racing environment, a power slide is employed, in which the vehicle travels in a leaning posture while slip of the rear wheel is intentionally caused with the throttle in an open state. Causing slip of the rear wheel helps change the heading of the vehicle body within a short time while minimizing decrease in speed. Another traveling method, which is not limited to cornering, that can be employed under special environments such as racing environments involves accelerating the vehicle by outputting a high driving force from a power source to an extent that causes slip of the rear wheel.

The leaning vehicle is sometimes required to perform an upshift even while the rear wheel is slipping.

In a slip state, the rear wheel is subjected simultaneously to resistance due to frictional force from the road surface and driving force that overcomes this frictional force. Thus, the rear wheel rotates while slipping relative to the road surface. A dog-type transmission transmits this driving force to the rear wheel. That is, engaged dog elements are subjected to driving force being transmitted. The dog elements of the dog-type transmission are unable to disengage while under such transmitted driving force.

Reducing the transmitted driving force so as to allow the dog elements to disengage causes the slip to decrease and the rear-wheel grip to recover, and these effects continue during the period in which the transmitted driving force is reduced. In a situation in which the leaning vehicle is performing a power slide under a special environment such as a racing environment, for example, grip recovery causes the leaning vehicle to straighten up from the leaning posture, temporarily interrupting the power slide.

After an engagement of the dog elements corresponding to a post-upshift gear stage has been established, restoration of the transmitted driving force begins, and thus the power slide resumes.

Through intensive study on the relationship between the transmitted driving force and the lean angle of a leaning vehicle, the inventor of the present teaching found the following facts. That is, once the transmitted driving force begins to increase, slip of the rear wheel resumes and the lean angle begins to increase again. The leaning vehicle therefore moves from a leaning posture toward an upright state during a period from the start of the decrease in the transmitted driving force until the start of the increase in the transmitted driving force. This period differs from a period during which the transmitted driving force is low due to an upshift. More specifically, the inventor of the present teaching found that in a case where an upshift is performed while the rear wheel is slipping, the transmitted driving force is lower than that before the upshift in the period during which the transmitted driving force increases after the dog elements have been engaged but this period is not part of a period in which the leaning vehicle straightens up from the leaning posture and the power slide is temporarily interrupted.

In a case where an upshift is performed while the rear wheel is slipping, therefore, gradual increasing of the transmitted driving force after engagement of the dog elements makes it possible to resume increasing the lean angle in a gradual manner when resuming the power slide, while reducing the influence on the motion of the leaning vehicle straightening up from the leaning posture.

In order to achieve the object described above, a leaning vehicle according to an aspect of the present teaching has the following configuration.
(1) A leaning vehicle including:
   an engine configured to output driving force;
   a front wheel;
   a rear wheel configured to rotate under the driving force outputted by the engine;
   a clutch having a clutch actuator and configured to be changeable between an engaged state and a disengaged state to change the state of the driving force through driving by the clutch actuator;
   a dog-type transmission configured to upshift by disengaging and engaging dog elements, and transmit, as transmitted driving force, the driving force transmitted thereto from the clutch to the rear wheel via the engaged dog elements; and
   a control unit configured to control the engine and the clutch actuator, wherein
   for the upshift, the control unit controls the clutch actuator to reduce the transmitted driving force before cancelling the engagement of the dog elements and restores the transmitted driving force after establishing an engagement of the dog elements corresponding to a post-upshift gear stage, and
   in a case where the upshift is performed while the leaning vehicle is in a slip handling state, the control unit controls the clutch actuator such that the transmitted driving force being restored after the establishment of the engagement of the dog elements corresponding to the post-upshift gear stage is at a lower level than that in a case where the leaning vehicle is in a state other than the slip handling state, the slip handling state representing a state in which slip of the rear wheel has been detected or a state in which the control unit has been set to a slip-assuming control state through a rider operation.

The leaning vehicle described in (1) includes an engine, a front wheel, a rear wheel, a clutch, a dog-type transmission, and a control unit. The engine outputs driving force. The rear wheel is a drive wheel. The rear wheel rotates under the driving force outputted by the engine. The clutch has a clutch actuator. The clutch is changeable between an engaged state and a disengaged state to change the state of the driving force through driving by the clutch actuator.

The dog-type transmission upshifts by disengaging and engaging dog elements. The dog-type transmission transmits, as transmitted driving force, the driving force from the engine to the rear wheel via the engaged dog elements.

The control unit controls the engine and the clutch actuator. For an upshift, the control unit controls the clutch actuator to reduce the transmitted driving force before cancelling the engagement of the dog elements. The control unit increases the reduced transmitted driving force after establishing an engagement of the dog elements corresponding to a post-upshift gear stage.

In a case where an upshift is performed while the leaning vehicle is in a slip handling state, the control unit controls the clutch actuator such that the transmitted driving force being restored after the establishment of the engagement of the dog elements corresponding to the post-upshift gear stage is at a lower level than that in a case where the leaning vehicle is in a state other than the slip handling state. The slip handling state represents a state in which slip of the rear wheel has been detected or a state in which the control unit has been set to a slip-assuming control state. The control unit is set to the slip-assuming control state through a rider operation.

In a slip state, the rear wheel is subjected simultaneously to resistance due to frictional force from the road surface and driving force that overcomes this frictional force. Thus, the rear wheel rotates while slipping relative to the road surface. The dog-type transmission transmits this driving force to the rear wheel. That is, the engaged dog elements are subjected to driving force being transmitted. The dog elements of the dog-type transmission are unable to disengage while under such transmitted driving force.

Reducing the transmitted driving force so as to allow the dog elements to disengage causes the slip to decrease and the rear-wheel grip to recover, and these effects continue during the period in which the transmitted driving force is reduced. In a situation in which the leaning vehicle is performing a power slide, for example, grip recovery causes the leaning vehicle to straighten up from a leaning posture, temporarily interrupting the power slide.

After an engagement of the dog elements corresponding to a post-upshift gear stage has been established, restoration of the transmitted driving force begins, and thus the power slide resumes.

Once the transmitted driving force begins to increase, slip of the rear wheel resumes and the lean angle begins to increase again. The leaning vehicle therefore moves from a leaning posture toward an upright state during a period from the start of the decrease in the transmitted driving force until the start of the increase in the transmitted driving force. This period differs from a period during which the transmitted driving force is low due to an upshift. More specifically, in a case where an upshift is performed while the rear wheel is slipping, the period during which the transmitted driving force increases after the dog elements have been engaged is part of a period in which the transmitted driving force is lower than that before the upshift but is not part of a period in which the leaning vehicle straightens up from the leaning posture and the power slide is temporarily interrupted.

In a case where an upshift is performed while the rear wheel is slipping, therefore, gradual increasing of the transmitted driving force after engagement of the dog elements makes it possible to resume increasing the lean angle in a gradual manner when resuming the power slide, while reducing the influence on the motion of the leaning vehicle straightening up from the leaning posture.

In a case where an upshift is performed while the leaning vehicle is in the slip handling state, the control unit described in (1) controls the clutch actuator such that the transmitted driving force being restored after the establishment of the engagement of the dog elements corresponding to the post-upshift gear stage is at a lower level than that in a case where the leaning vehicle is in a state other than the slip handling state. In a case where an upshift is performed while the leaning vehicle is in the slip handling state, therefore, the transmitted driving force after the establishment of the engagement of the dog elements is at a lower level. Accordingly, in a case where an upshift is performed while the leaning vehicle is in the slip handling state, the amount of increase in the speed, i.e., the acceleration, of the drive wheel with the restoration of the transmitted driving force is smaller than, for example, that in the case of a non-slip handling state. This configuration makes it possible to resume increasing the lean angle in a gradual manner when resuming the power slide, while reducing the influence on the motion of the leaning vehicle straightening up from the leaning posture, in a case where an upshift is performed while the rear wheel is slipping.

In contrast, in a case where an upshift is performed while the rear wheel is not slipping, the transmitted driving force being restored immediately after the establishment of the engagement of the dog elements is higher, resulting in greater acceleration of the drive wheel. This configuration makes it possible to prevent prolongation of the period in which the driving force being transmitted to the rear wheel is reduced.

Thus, according to the configuration described in (1), the leaning vehicle achieves both prevention of prolongation of the period in which driving force being transmitted to the rear wheel is reduced for a gear shifting and a gradual return from the grip-recovering state to the slip state during vehicle travel with rear-wheel slip.

It should be noted that the configuration has been described using a power slide as an example, which is visually intuitive because of the lean angle. However, the configuration described in (1) is not limited to a power slide involving the leaning state and, for example, makes it possible to achieve both a reduction in the period of grip recovery due to an upshift and a gradual transition from the grip-recovering state to the slip state also in a situation in which the leaning vehicle accelerates in the upright state while the rear wheel is slipping under a special environment such as a racing environment.

According to an aspect of the present teaching, the leaning vehicle may adopt the following configuration.

(2) The leaning vehicle described in (1), wherein
the dog-type transmission has a gear shift actuator configured to engage and disengage the dog elements,
the control unit causes the gear shift actuator to perform an upshift of the dog-type transmission based on a shift map associating at least rotation speeds of the engine and gear stages with each other, and
the slip-assuming control state is an off-road mode in which a shift map having gear shifting characteristics suitable for off-road operation is referenced.

In the configuration described in (2), in the off-road mode set through a rider operation, the actuator performs an upshift of the dog-type transmission by referencing a shift map having gear shifting characteristics suitable for off-road operation. In a case where an upshift is performed in the off-road mode, the transmitted driving force after the establishment of the engagement of the dog elements is at a lower level. This configuration makes it possible to resume increasing the lean angle in a gradual manner when resuming the power slide, while reducing the influence on the motion of the leaning vehicle straightening up from the leaning posture.

The shift map having gear shifting characteristics suitable for off-road operation is, for example, a high-speed map associating higher rotation speeds with gear stages than in the case of a non-off-road mode. In the case of the high-speed map, upshifts to respective gear stages are performed at higher rotation speeds than in a non-off-road mode. In this case, therefore, the engine tends to output higher driving force due to higher rotation speeds, facilitating slip of the rear wheel such as during a power slide. In the off-road mode, which facilitates slip of the wheel, it is possible to resume increasing the lean angle in a gradual manner with the transmitted driving force at a lower level immediately after the establishment of the engagement of the dog elements based on the slip handling state.

The terminology used herein is for defining particular embodiments only and is not intended to limit the teaching. The term "and/or" used herein includes any and all combinations of one or more of the associated listed items. The terms "including", "comprising", or "having", and variations thereof used herein specify the presence of stated features, steps, operations, elements, components, and/or equivalents thereof, and can include one or more of steps, operations, elements, components, and/or their groups. As used herein, the terms "attached", "connected", "coupled", and/or equivalents thereof are used in a broad sense, and include both direct and indirect attachment, connection, and coupling. In addition, the terms "connected" and "coupled" are not restricted to physical or mechanical connection or coupling, and can include direct or indirect electrical connection or coupling. Unless otherwise defined, all terms (including technical and scientific terms) used herein have the same meaning as commonly understood by one of ordinary skill in the art to which the present teaching belongs. Terms, such as those defined in commonly used dictionaries, should be interpreted as having a meaning that is consistent with their meaning in the context of the present disclosure and relevant art and should not be interpreted in an idealized or overly formal sense unless expressly so defined herein. It will be understood that the description of the present teaching discloses a number of techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present invention as defined by the appended claims.

This description describes a novel leaning vehicle. In the description given below, for the purposes of explanation, a number of specific details are set forth in order to provide a thorough understanding of the present teaching. It will be apparent, however, that those skilled in the art may practice the present teaching without these specific details. The present disclosure is to be considered as an exemplification of the present teaching, and is not intended to limit the present teaching to the specific embodiments illustrated by drawings or descriptions below.

The leaning vehicle refers to a straddled vehicle configured to be capable of making a turn in a leaning posture. The straddled vehicle refers to a vehicle of a type that allows a driver to sit astride a saddle. The leaning vehicle is configured to make a turn in a posture leaning toward the center of a curve. By doing this, the vehicle configured to be capable of making a turn in a leaning posture counteracts centrifugal force acting on the vehicle during the turn. Examples of leaning vehicles include off-road motorcycles. The leaning vehicle is not particularly limited and may be, for example, an on-road motorcycle, a scooter, or a moped. The leaning vehicle may be a motor tricycle. The leaning vehicle is desired to be agile, and therefore responsiveness to a vehicle starting operation for the vehicle to move forward is regarded as important.

Operation of the engine means that the engine outputs, as crankshaft torque and rotation speed, driving force generated through combustion.

The dog-type transmission includes a multi-stage transmission in which at least one drive gear is constantly in mesh with a driven gear. The dog-type transmission according to the present teaching includes a constant-mesh transmission in which all drive gears are in mesh with driven gears, and an engagement of dog elements corresponding to one gear stage is established. The dog-type transmission according to the present teaching performs a gear shifting operation, including an upshift and a downshift, using power of the gear shift actuator. The gear shift actuator is controlled by the control unit. That is, operation of the dog-type transmission according to the present teaching is controlled by the control unit.

The dog-type transmission according to the present teaching is, for example, an AMT (Automated Manual Transmission) that performs gear shifting in response to a rider's switch operation. However, the dog-type transmission according to the present teaching is not particularly limited and may be, for example, an automatic transmission (AT) that performs gear shifting operations based on the speed of the leaning vehicle and the rotation speed of the engine.

Furthermore, the dog-type transmission according to the present teaching is not particularly limited and may be, for example, of a type that upshifts by disengaging and engaging the dog elements using a rider's operating force. In the case of the dog-type transmission of this type, for example, the control unit can detect an upshift of the dog-type transmission performed through a rider operation via a sensor provided in the dog-type transmission.

The state of the clutch is changeable between an engaged state and a disengaged state. The state of the clutch also includes an intermediate state between the engaged state and the disengaged state. Changing the state of the clutch from the engaged state to another state includes changing the state to the disengaged state or to the intermediate state. The output of the clutch actuator changes the state of the clutch without driving a shifting operation of the dog-type transmission.

Slip of the rear wheel refers to a condition in which the rear wheel rotates in a rotational direction corresponding to forward travel while sliding against the ground.

The control unit is, for example, implemented by a computer including a central processing unit (CPU) that executes programs and memory that stores programs therein. However, the control unit is not particularly limited and may be implemented by an electronic circuit that does not execute programs.

### Advantageous Effects of Invention

According to the present teaching, it is possible to provide a leaning vehicle that achieves both prevention of prolongation of the period in which driving force being transmitted to a rear wheel is reduced for a gear shifting and a gradual return from a grip-recovering state to a slip state during vehicle travel with rear-wheel slip.

### Brief Description of Drawings

[FIG. 1] A diagram illustrating a leaning vehicle according to an embodiment.
[FIG. 2] A time chart for explaining operations of components for an upshift of the leaning vehicle shown in FIG. 1.

### Description of Embodiments

The following describes embodiments of the present teaching with reference to the drawings.

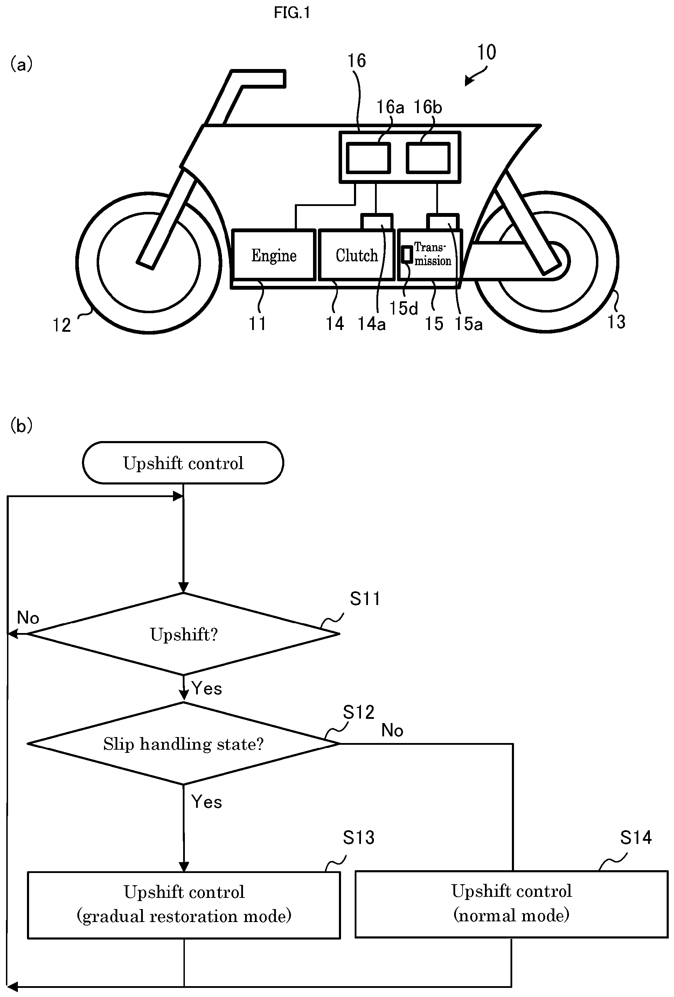

FIG. 1 is a diagram illustrating a leaning vehicle according to a first embodiment. Part (a) of FIG. 1 is a side view showing an outline configuration of the leaning vehicle. Part (b) of FIG. 1 is a flowchart for explaining upshift control.

A leaning vehicle 10 shown in Part (a) of FIG. 1 includes an engine 11, a front wheel 12, a rear wheel 13, a clutch 14, a dog-type transmission 15 (transmission), and a control unit 16.

The engine 11 outputs driving force.

The rear wheel 13 is a drive wheel. The rear wheel 13 rotates under the driving force outputted by the engine 11.

The clutch 14 has a clutch actuator 14a. The clutch 14 is changeable between an engaged state and a disengaged state through driving by the clutch actuator 14a. The clutch 14 includes a clutch plate, not shown, which is movable between a position corresponding to the engaged state and a position corresponding to the disengaged state. The clutch actuator 14a changes the state of the clutch 14 by moving the clutch plate.

The dog-type transmission 15 shifts between gear stages. The dog-type transmission 15 upshifts by disengaging and engaging dog elements 15d. The dog-type transmission 15 also downshifts by disengaging and engaging the dog elements 15d.

The dog-type transmission 15 transmits, as transmitted driving force, the driving force from the engine 11 to the rear wheel 13 via the engaged dog elements 15d. The dog-type transmission 15 includes, for example, a gear shift actuator 15a. The dog-type transmission 15 upshifts or downshifts through driving by the gear shift actuator 15a. The output of the gear shift actuator 15a drives operation of the dog-type transmission 15 without driving operation of the clutch 14.

The control unit 16 controls the engine 11 and the clutch actuator 14a. The control unit 16 also controls the gear shift actuator 15a.

The control unit 16 is implemented by a computer including a central processing unit (CPU) 16a that executes programs and memory 16b that stores programs therein. The central processing unit 16a reads and executes a program stored in the memory 16b to control the engine 11 and the clutch actuator 14a.

The control unit 16 causes the gear shift actuator 15a to perform an upshift or a downshift of the dog-type transmission 15 based on at least the rotation speed of the engine 11. Thus, the dog-type transmission 15 automatically shifts between gear stages without relying on a rider operation. More specifically, the control unit 16 causes the gear shift actuator 15a to perform an upshift of the dog-type transmission 15 based on a shift map associating at least rotation speeds of the engine 11 and gear stages with each other.

The control unit 16 adjusts the characteristics of the upshift in response to a rider operation. More specifically, the state of the control unit 16 can be set to an off-road mode in response to a rider operation. In the off-road mode, the control unit 16 references a shift map having gear shifting characteristics suitable for off-road operation. In the off-road mode, the control unit 16 uses an off-road shift map as the shift map for reference. The off-road shift map is a high-speed map associating higher rotation speeds with gear stages than in the case of a non-off-road mode.

It should be noted that the control unit 16 can, for example, cause an upshift or a downshift of the dog-type transmission 15 in response to a rider operation. The control unit 16 causes, for example, the gear shift actuator 15a to perform an upshift or a downshift of the dog-type transmission 15 in response to a rider's operation of a gear shift switch.

For causing the dog-type transmission 15 to upshift or downshift, the control unit 16 temporarily reduces the transmitted driving force, which is driving force being transmitted through the dog elements 15d. The control unit 16 causes, for example, the clutch actuator 14a to change the state of the clutch 14 from the engaged state toward the disengaged state before cancelling an engagement of the dog elements 15d. More specifically, the control unit 16 causes the clutch actuator 14a to change the state of the clutch 14 from the engaged state to either the disengaged state or a partially-engaged clutch state. As a result of the state of the clutch 14 being changed from the engaged state to another state, the clutch capacity, which is the torque transmission capability of the clutch 14, decreases. As a result, the transmitted driving force, which is driving force being transmitted through the dog elements 15d, decreases. Thus, the control unit 16 can cancel an engagement of the dog elements 15d corresponding to a pre-shift gear stage and establish an engagement of the dog elements 15d corresponding to a post-shift gear stage.

For an upshift, for example, the control unit 16 controls the clutch actuator 14a to reduce the transmitted driving force before cancelling an engagement of the dog elements 15d. Then, after establishing an engagement of the dog elements 15d corresponding to a post-upshift gear stage, the control unit 16 restores the transmitted driving force, that is, increases the transmitted driving force.

In a case where an upshift is performed while the leaning vehicle 10 is in a slip handling state, the control unit 16 controls the clutch actuator 14a such that the transmitted driving force being restored immediately after the establishment of the engagement of the dog elements 15d corresponding to the post-upshift gear stage is at a lower level than that in a case where the leaning vehicle 10 is in a state other than the slip handling state.

The slip handling state represents, for example, a state in which slip of the rear wheel 13 has been detected. Slip of the rear wheel 13 is detected, for example, when the rotation speed of the rear wheel 13 is higher than the rotation speed of the front wheel 12, and the speed difference between the front wheel 12 and the rear wheel 13 is greater than a speed difference reference value. For another example of a detection method that can be employed, slip of the rear wheel 13 may be detected when the variation in the speed difference between the front wheel 12 and the rear wheel 13 is greater than a reference value. A transition to a slip-assuming control state occurs, for example, in response to a rider operation. The slip-assuming control state is, for example, an off-road mode.

Part (b) of FIG. 1 is a flowchart for explaining the upshift control that is performed by the control unit 16 shown in FIG. 1.

In the case of an upshift (Yes in S11) and a state other than the slip handling state (No in S12), the control unit 16 performs the upshift control using a normal mode (S14). In the normal mode, the control unit 16 causes the clutch actuator 14a to change the state of the clutch 14 from the engaged state to another state before cancelling an engagement of the dog elements 15d. After cancelling the engagement of the dog elements 15d and establishing an engagement of the dog elements 15d corresponding to a post-shift gear stage, the control unit 16 causes the clutch actuator 14a to change the state of the clutch 14 to the engaged state. As a result of the state of the clutch 14 being changed to the engaged state, the clutch capacity increases. As a result, the transmitted driving force, which is driving force being transmitted through the dog elements 15d, increases.

In the case of an upshift (Yes in S11) and the slip handling state (Yes in S12), the control unit 16 performs the upshift control using a gradual restoration mode (S13). In the gradual restoration mode, the control unit 16 also causes the clutch actuator 14a to change the state of the clutch 14 from the engaged state to another state before cancelling an engagement of the dog elements 15d. After establishing an engagement of the dog elements 15d corresponding to a post-shift gear stage, the control unit 16 causes the clutch actuator 14a to change the state of the clutch 14.

In the gradual restoration mode (S13), the control unit 16 controls the clutch actuator 14a such that the transmitted driving force being restored immediately after the establishment of the engagement of the dog elements 15d is at a lower level than that in a case where the leaning vehicle 10 is in a state other than the slip handling state. For example, in a case where an upshift is performed while the leaning vehicle 10 is in the slip handling state, the control unit 16 causes the clutch actuator 14a to change the state of the clutch 14 to, rather than to the engaged state, a state closer to the disengaged state than to the engaged state. For example, the control unit 16 causes the clutch actuator 14a to change the state of the clutch 14 to a partially-engaged state. As a result, in a case where an upshift is performed while the leaning vehicle 10 is in the slip handling state, the transmitted driving force immediately after the establishment of the engagement of the dog elements 15d is at a lower level than that in a case where the leaning vehicle 10 is in a state other than the slip handling state.

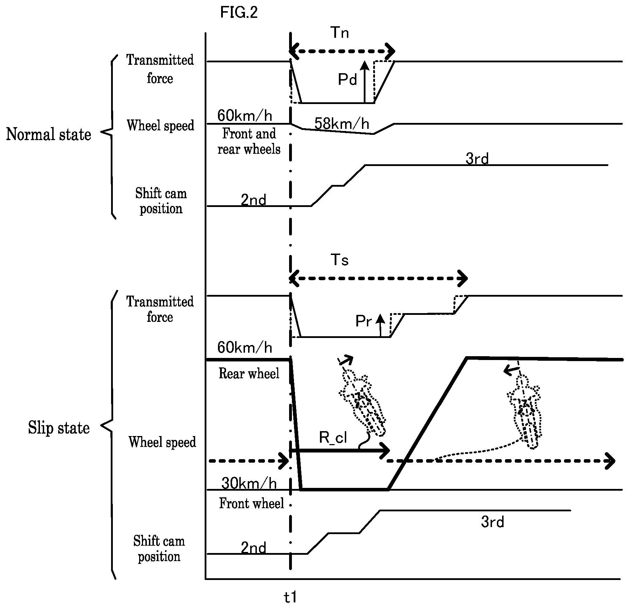

FIG. 2 is a time chart for explaining operations of components for an upshift of the leaning vehicle shown in FIG. 1.

The time chart in FIG. 2 shows the operations of the components in the normal mode for use when the rear wheel 13 is not slipping, which corresponds to a normal state, and the operations of the components in the gradual restoration mode for use when the rear wheel 13 is slipping.

The chart in FIG. 2 shows the transmitted driving force (transmitted force), which is driving force being transmitted through the dog elements 15d, the wheel speed of the front and rear wheels, and the shift cam position as specific operations of the components. The transmitted driving force also means driving force being applied to the rear wheel 13 via the dog elements 15d. In addition to the transmitted driving force, FIG. 2 shows changes in a command for controlling the transmitted driving force. The command for controlling the transmitted driving force refers to a command indicating an operating amount of the clutch actuator 14a.

With respect to the shift cam position, FIG. 2 shows an example of the rotational position of the shift cam from when an engagement of the dog elements 15d corresponding to a pre-upshift gear stage is cancelled until an engagement of the dog elements 15d corresponding to a post-upshift gear stage is completed. In order to facilitate an understanding of how the operation progresses, FIG. 2 shows an example of the rotational position of the shift cam from when an engagement of the dog elements 15d corresponding to second gear is cancelled until an engagement of the dog elements 15d corresponding to third gear is completed. A step appearing in a waveform representing the rotational position of the shift cam indicates an example of a location where top faces of the dog elements 15d temporarily make contact with each other before the engagement of the dog elements 15d corresponding to third gear is completed. Furthermore, in order to facilitate concrete visualization of how the wheels behave, FIG. 2 shows an example of the wheel speed using a numerical value expressed as an equivalent vehicle speed.

### <Upshift using Normal Mode in Normal State>

The following first describes the upshift control using the normal mode for use when the rear wheel 13 is not slipping, which corresponds to the normal state.

At a point in time t1, a series of operations for an upshift begins. First, the control unit 16 outputs a command to reduce the transmitted driving force. More specifically, the control unit 16 outputs, to the clutch actuator 14a, a command to change the clutch 14 from the engaged state toward the disengaged state as indicated by a dashed line. In the example shown in FIG. 2, the control unit 16 outputs a command to change the clutch 14 to the disengaged state. In response to the command, the clutch 14 transitions to the disengaged state. The driving force being transmitted from the engine 11 via the clutch 14 gradually decreases over time as indicated by a diagonal line, rather than changing as commanded, which is indicated by the dashed line.

As a result of the transmitted driving force decreasing, the dog elements 15d become disengageable.

At a point in time when the transmitted driving force decreases, the control unit 16 controls the gear shift actuator 15a, thereby cancelling the engagement of the dog elements 15d corresponding to second gear, and subsequently establishing the engagement of the dog elements 15d corresponding to third gear.

At a point in time when the engagement of the dog elements 15d corresponding to third gear is completed, the control unit 16 outputs, to the clutch actuator 14a, a command to change the clutch 14 to the engaged state as indicated by the dashed line. The driving force being transmitted from the engine 11 via the clutch 14 gradually increases over time as indicated by a diagonal line, rather than changing as commanded, which is indicated by the dashed line. The speed of the front wheel 12 and the speed of the rear wheel 13 are also restored as the driving force increases.

As described above, the series of operations for an upshift is completed.

Due to the clutch control operations, the transmitted driving force decreases during a period Tn from the start of the change in the state of the clutch 14 from the engaged state to another state until the clutch 14 returns to the engaged state. During this period, the vehicle speed decreases.

### <Upshift using Gradual Restoration Mode for Use When Rear Wheel Is Slipping>

Next, the following describes the upshift control using the gradual restoration mode for use when the rear wheel 13 is slipping.

At a point in time t1, a series of operations for an upshift begins. First, the control unit 16 outputs a command to reduce the transmitted driving force. More specifically, the control unit 16 outputs, to the clutch actuator 14a, a command to change the clutch 14 from the engaged state toward the disengaged state as indicated by a dashed line. In the example shown in FIG. 2, the control unit 16 outputs a command to change the clutch 14 to the disengaged state. In response to the command, the clutch 14 transitions to the disengaged state. The driving force being transmitted from the engine 11 via the clutch 14 gradually decreases over time as indicated by a diagonal line, rather than changing as commanded, which is indicated by the dashed line.

The rear wheel 13 in the slip state is rotating at a higher speed than the front wheel 12. The front wheel 12, which is not slipping, reflects the actual vehicle speed of the leaning vehicle 10. For example, before the upshift, the front wheel 12 is rotating at an equivalent vehicle speed of 30 km/h, while the rear wheel 13 is rotating at 60 km/h. At this time, the rear wheel 13 is subjected simultaneously to resistance due to frictional force from the road surface and driving force from the engine 11 that exceeds this resistance force. Thus, the rear wheel 13 rotates at a higher speed than the front wheel 12.

Even if the speed of the rear wheel 13 decreases due to a decrease in the driving force outputted by the engine 11, the dog elements 15d continue to transmit the driving force until the speed of the rear wheel 13 becomes equal to or lower than the speed of the front wheel 12. That is, the application of the transmitted driving force to the engaged dog elements 15d continues until the speed of the rear wheel 13 becomes equal to or lower than the speed of the front wheel 12, preventing disengagement of the dog elements 15d. When the speed of the rear wheel 13 becomes equal to or lower than the speed of the front wheel 12 due to a decrease in the transmitted driving force, the transmitted driving force is near zero, enabling disengagement of the dog elements 15d.

At a point in time when the transmitted driving force decreases to near zero, the control unit 16 controls the gear shift actuator 15a, thereby cancelling the engagement of the dog elements 15d corresponding to second gear, and subsequently establishing the engagement of the dog elements 15d corresponding to third gear.

The control unit 16 restores the transmitted driving force after establishing the engagement of the dog elements 15d corresponding to third gear, which is the post-upshift gear stage. At a point in time when the engagement of the dog elements 15d corresponding to third gear is completed, the control unit 16 causes the clutch actuator 14a to change the clutch 14 toward the engaged state. Thus, the control unit 16 restores the transmitted driving force.

However, the control unit 16 controls the clutch actuator 14a such that the transmitted driving force being restored is at a transmitted driving force level Pr lower than a transmitted driving force level Pd in the case of the normal mode, which corresponds to a state other than the slip handling state. For example, the control unit 16 causes the clutch actuator 14a to change the clutch 14 to, rather than to the engaged state, the partially-engaged state between the engaged state and the disengaged state.

The speed of the rear wheel 13 increases as the state of the clutch 14 changes toward the engaged state. That is, the leaning vehicle 10 returns to the slip state. However, since the state of the clutch 14 changes to the partially-engaged state between the engaged state and the disengaged state, the transmitted driving force being restored is at the transmitted driving force level Pr lower than the transmitted driving force level Pd to be reached in the case of the normal mode. The speed of the rear wheel 13 therefore increases more gradually, for example, than it would if the clutch 14 is changed to the engaged state, such as in the case of the normal mode. That is, the restoration of the speed of the rear wheel 13 takes longer, for example, than it would if the clutch 14 is changed to the engaged state, such as in the case of the normal mode.

After a predetermined period of time has elapsed from the time when the transmitted driving force level Pr is reached, the control unit 16 causes the clutch actuator 14a to change the clutch 14 to the engaged state.

As a result of the upshift control using the gradual restoration mode, at the point in time t1, the clutch 14 begins to change from the engaged state to another state, and the speed of the rear wheel 13 also begins to decrease. Thus, from the point in time t1, the rear wheel 13 transitions out of the slip state with time. That is, the slip state of the rear wheel 13 diminishes.

For example, in a situation in which the leaning vehicle 10 is leaning while performing a power slide, the transmitted driving force begins to decrease and the speed of the rear wheel 13 also begins to decrease at the point in time t1, and the lean angle decreases as the rear wheel 13 transitions out of the slip state with time. That is, the leaning vehicle 10 straightens up, undergoing a change in posture. The change occurring as the rear wheel 13 transitions out of the slip state with time continues for a period R_cl until the start of the change in the state of the clutch 14 toward the engaged state.

Thereafter, when the state of the clutch 14 begins to change toward the engaged state, slip of the rear wheel 13 resumes, and the lean angle of the leaning vehicle 10 begins to increase again.

The leaning vehicle 10 therefore moves from the leaning posture toward an upright state during the period R_cl from the start of the decrease in the transmitted driving force until the start of the increase in the transmitted driving force. This period differs from a period Ts during which the transmitted driving force is low due to the upshift. More specifically, in a case where an upshift is performed while the rear wheel 13 is slipping, the period during which the transmitted driving force increases after the dog elements 15d have been engaged is included in the period Ts in which the transmitted driving force is lower than that before the upshift but is not included in the period R_cl in which the leaning vehicle 10 straightens up from the leaning posture and the power slide is temporarily interrupted.

In the case of the gradual restoration mode, the control unit 16 according to the present embodiment controls the clutch actuator 14a such that the transmitted driving force being restored after the establishment of the engagement of the dog elements 15d corresponding to the post-upshift gear stage is at the transmitted driving force level Pr lower than the transmitted driving force level Pd in the case of the normal mode.

In a case where an upshift is performed while the leaning vehicle 10 is in the slip handling state, therefore, the transmitted driving force immediately after the establishment of the engagement of the dog elements 15d is at the lower transmitted driving force level Pr. Accordingly, in a case where an upshift is performed using the gradual restoration mode, the amount of increase in the speed, i.e., the acceleration, of the drive wheel with the restoration of the transmitted driving force is smaller than, for example, that in the case of the normal mode. This configuration makes it possible to resume increasing the lean angle in a gradual manner when resuming the power slide, while reducing the influence on the motion of the leaning vehicle 10 straightening up from the leaning posture, in a case where an upshift is performed while the rear wheel 13 is slipping.

In contrast, in a case where an upshift is performed while the rear wheel 13 is not slipping, the transmitted driving force being restored immediately after the establishment of the engagement of the dog elements 15d is at a higher transmitted driving force level Pd, resulting in greater acceleration of the drive wheel. This configuration makes it possible to prevent prolongation of the period in which the driving force being transmitted to the rear wheel 13 is reduced.

Thus, the leaning vehicle 10 achieves both prevention of prolongation of the period in which the driving force being transmitted to the rear wheel 13 is reduced for a gear shifting and a gradual return from the grip-recovering state to the slip state during vehicle travel with rear-wheel slip.

### Reference Signs List

10: leaning vehicle
11: engine
12: front wheel
13: rear wheel
14: clutch
14a: clutch actuator
15: dog-type transmission
15a: gear shift actuator
15d: dog element
16: control unit

## Claims

1. A leaning vehicle (10) comprising:
an engine (11) configured to output a driving force;
a front wheel (12);
a rear wheel (13) configured to rotate under the driving force outputted by the engine (11);
a clutch (14) having a clutch actuator (14a) and configured to be changeable between an engaged state and a disengaged state to change the state of the driving force through driving by the clutch actuator (14a);
a dog-type transmission (15) configured to upshift by disengaging and engaging dog elements (15d), and transmit, as transmitted driving force, the driving force transmitted thereto from the clutch (14) to the rear wheel (13) via the engaged dog elements (15d); and
a control unit (16) configured to control the engine (11) and the clutch actuator (14a), wherein
for the upshift, the control unit (16) is configured to control the clutch actuator (14a) to reduce the transmitted driving force before cancelling the engagement of the dog elements (15d) and restore the transmitted driving force after establishing an engagement of the dog elements (15d) corresponding to a post-upshift gear stage, and
in a case where the upshift is performed while the leaning vehicle (10) is in a slip handling state, the control unit (16) is configured to control the clutch actuator (14a) such that the transmitted driving force being restored after the establishment of the engagement of the dog elements (15d) corresponding to the post-upshift gear stage is at a lower level than that in a case where the leaning vehicle (10) is in a state other than the slip handling state, the slip handling state representing a state in which slip of the rear wheel (13) has been detected or a state in which the control unit (16) has been set to a slip-assuming control state through a rider operation.

2. The leaning vehicle (10) according to claim 1, wherein
the dog-type transmission (15) has a gear shift actuator (15a) configured to engage and disengage the dog elements (15d),
the control unit (16) is configured to cause the gear shift actuator (15a) to perform an upshift of the dog-type transmission (15) based on a shift map associating at least rotation speeds of the engine (11) and gear stages with each other, and
the slip-assuming control state is an off-road mode in which a shift map having gear shifting characteristics suitable for off-road operation is referenced.
